# EUROPEAN PATENT SPECIFICATION

(11) **EP 2 813 772 B1**
(45) Date of publication and mention of the grant of the patent: **01.06.2016**
(21) Application number: 13746219.8
(22) Date of filing: 25.01.2013
(51) Int. Cl.: F24F 7/08, F24F 6/00, F24F 6/04, F24F 12/00

(54) **VENTILATION DEVICE**
VENTILATIONSVORRICHTUNG
APPAREIL DE VENTILATION

(30) Priority: 10.02.2012 JP 2012027167
(43) Date of publication of application: 17.12.2014
(73) Proprietor: Daikin Industries, Ltd., Osaka 530-8323 (JP)
(72) Inventor: SHIOYAMA, Kazuhiro, Osaka-shi, Osaka 530-8323 (JP); FUJIMOTO, Tooru, Osaka-shi, Osaka 530-8323 (JP)
(74) Representative: Goddar, Heinz J.
(86) International application number: PCT/JP2013/000389
(87) International publication number: WO 2013/118443

(56) References cited:
- EP-A2- 2 264 372
- WO-A1-2011/155069
- JP-A- H1 163 607
- JP-A- H06 213 492
- JP-A- 2000 088 287
- JP-A- 2000 346 382
- JP-A- 2005 016 844
- JP-A- 2010 286 176
- JP-A- 2011 085 299
- JP-A- 2012 021 687
- KR-A- 20100 128 813
- KR-A- 20100 128 815

## Description

### Technical Field

The present invention relates to a ventilation device that performs ventilation by supplying outdoor air indoors as supply air and exhausting room air outdoors as exhaust air. In particular, the present invention relates to a ventilation device according to the preamble of claim 1.

### Background Art

Conventionally, as shown in Patent Document 1 below, a ventilation device (humidity control device) with a configuration divided in the length direction has been known. The ventilation device includes a fan unit and a heat exchange unit (humidity control unit) that are separable from each other. The fan unit houses a supply fan and an exhaust fan as components necessary for ventilation, an electrical component necessary for electric control of the entire ventilation device, and the like. The heat exchange unit that is a plumbing unit houses a heat exchange element and a humidification element as components necessary for humidity control and heat exchange and the like. The fan unit and the heat exchange unit are connected to each other by connecting means arranged at an outer circumference section of a connecting section.

In the case of a configuration in which a ventilation device is divided into a plurality of units as described above, reduction in size and reduction in weight of the respective units are possible, and handling is easy. Therefore, each unit can be carried to an installing location easily even with one worker. Moreover, in the case where installation work of each unit is performed within a narrow space with low height such as an attic, it is possible to perform work of, for example, suspending and installing each unit in the attic easily and safely.

In the ventilation device divided into the fan unit housing the supply fan, the exhaust fan, and the like and the heat exchange unit housing the heat exchange element, the humidification element, and the like as disclosed in Patent Document 1, it is necessary to ensure airtightness of the connecting section so that the flow of supply air and the flow of exhaust air at the connecting section of the two units are not hindered. Therefore, there is a problem that a measure for ensuring airtightness at the connecting section becomes necessary to complicate the structure.

For the ventilation device, there are a type that requires a humidification function and a type that does not. Depending on the presence or absence of the humidification function, the flow of supply air and exhaust air within the heat exchange unit is changed significantly. Therefore, it is also necessary to change the specification of the fan unit connected to the heat exchange unit to a different one, depending on the type. Thus, for the fan unit forming the ventilation device, it is necessary to prepare each of a type of fan unit to be connected to the heat exchange unit including a humidifier and a type of fan unit to be connected to the heat exchange unit without a humidifier. Therefore, even in the case of a configuration in which the ventilation device is divided into a plurality of units, the specification of the respective units cannot be made common, and it is difficult to improve the productivity of the ventilation device.

Patent Document 1: Japanese Patent Application Laid-open No. 2000-274765 KR 2010 0128813 A discloses a ventilation device according to the preamble of claim 1.

### Summary of the Invention

An object of the present invention is to effectively improve the productivity of a ventilation device while favorably maintaining the flow of supply air and the flow of exhaust air at a connecting section for respective units.
Said object is solved by a ventilation device according to claim 1.
The dependent claim relates to a special embodiment thereof.

### Brief Description of the Drawings

[Fig. 1] Fig. 1 is a perspective view depicting one embodiment of a ventilation device according to the present invention.
[Fig. 2] Fig. 2 is an exploded perspective view of the ventilation device.
[Fig. 3] Fig. 3 is a plan view of the ventilation device.
[Fig. 4] Fig. 4A is a front view of a supply air guide, Fig. 4B is a side view of the supply air guide, and Fig. 4C is a plan view of the supply air guide.
[Fig. 5] Fig. 5 is a sectional view showing the installed state of a supply air blower provided to the ventilation device.
[Fig. 6] Fig. 6 is a perspective view showing the specific configuration of a humidification unit.
[Fig. 7] Fig. 7 is a perspective view showing the specific configuration of a sealing member.
[Fig. 8] Fig. 8 is a plan view showing the installed state of a water supply pipe.
[Fig. 9] Fig. 9 is a plan view showing the specific configuration of a drain pan.
[Fig. 10] Fig. 10 is a sectional view in a position along line X-X in Fig. 9.
[Fig. 11] Fig. 11 is a sectional view in a position along line XI-XI in Fig. 9.

### Best Mode for Carrying Out the Invention

An embodiment for carrying out the present invention will be described below in detail with reference to the drawings.

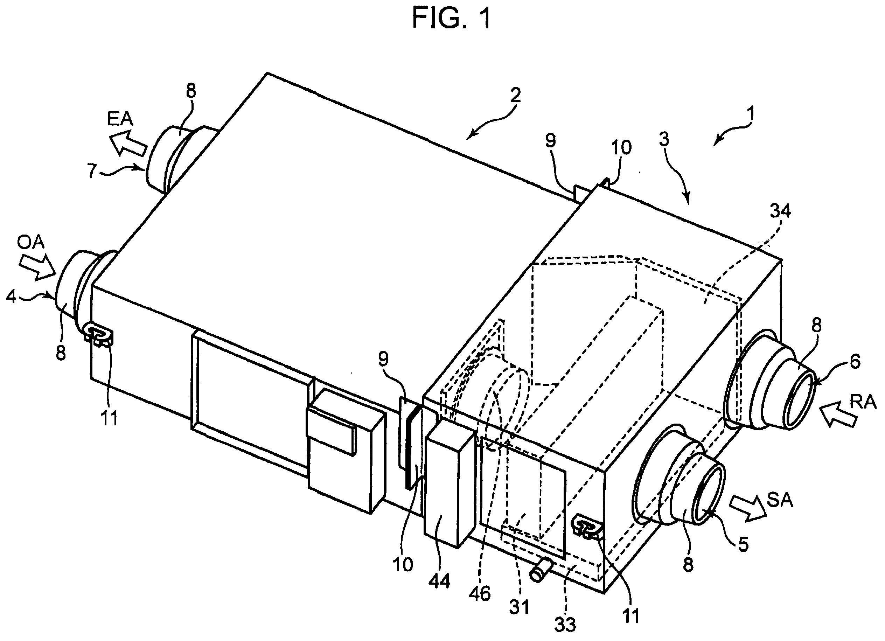

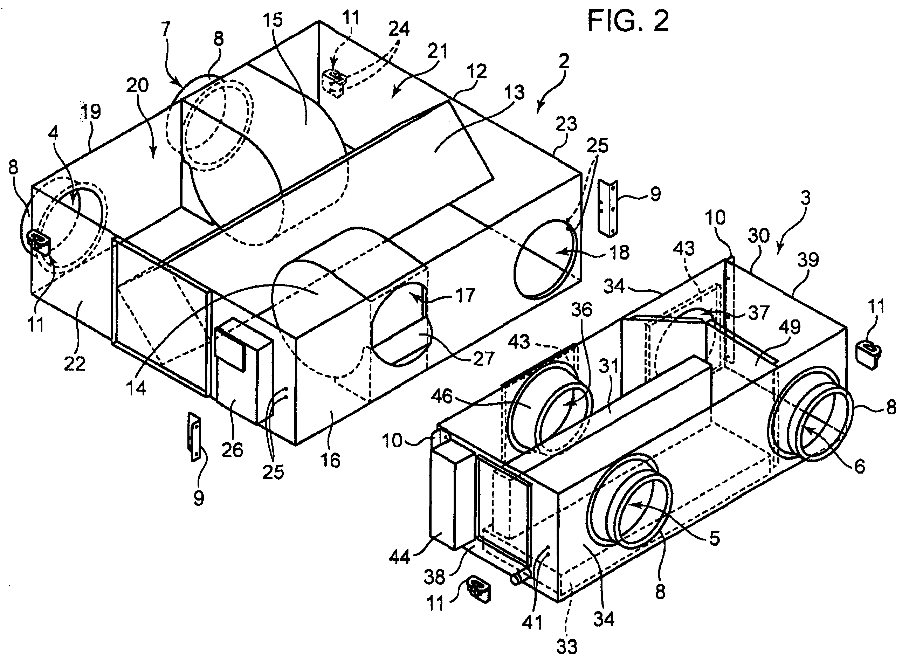

Fig. 1 and Fig. 2 show one embodiment of a ventilation device according to the present invention. A ventilation device 1 according to this embodiment is installed at a ceiling or the like and includes a total heat exchange-type heat exchange unit 2 and a constant humidity membrane-type humidification unit 3. The ventilation device 1 includes an outdoor air inlet port 4 at which outdoor air OA is suctioned, a supply air outlet port 5 at which the outdoor air OA is blown out to the indoor side as supply air SA, a room air inlet port 6 at which room air RA is suctioned, and an exhaust air outlet port 7 at which the room air RA is blown out to the outdoor side as exhaust air EA. To the outdoor air inlet port 4, the supply air outlet port 5, the room air inlet port 6, and the exhaust air outlet port 7, a duct joint 8 connected to a ceiling pipe or the like not shown in the drawing is attached.

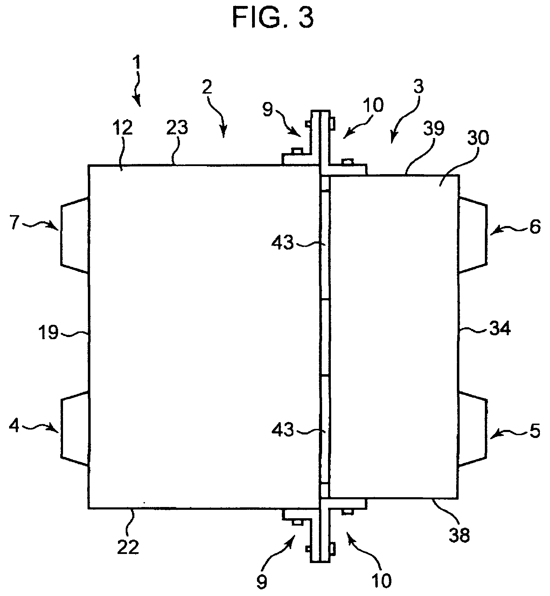

As shown in Fig. 3, the heat exchange unit 2 and the humidification unit 3 are coupled integrally by a coupling member formed of L-shaped metal fittings 9 and 10 fastened to each other with a fastening bolt. At both left and right side surface sections of the ventilation device 1, a metal suspension fitting 11 (see Fig. 1) formed of a standard component or the like is attached. The metal suspension fitting 11 is locked to a suspension bolt (not shown) hung from the ceiling. Accordingly, the ventilation device 1 is suspended from a ceiling section in a state where the heat exchange unit 2 and the humidification unit 3 are coupled.

The heat exchange unit 2 has a function of exchanging heat between the outdoor air OA suctioned from the outdoor air inlet port 4 and the room air RA suctioned from the room air inlet port 6. The heat exchange unit 2 includes a body case 12, a heat exchange element 13 for total heat exchange, a supply air blower 14, and an exhaust air blower 15 as main components.

The body case 12 of the heat exchange unit 2 is formed of a hollow box-shaped body having a flat cuboid shape. At a front plate 16 of the body case 12, i.e., a wall surface section on the near side to the humidification unit 3, a supply air delivery port 17 and an exhaust air introduction port 18 are formed. At a back plate 19 of the body case 12, i.e., a wall surface section on the far side from the humidification unit 3, the outdoor air inlet port 4 and the exhaust air outlet port 7 are formed. The internal space of the body case 12 is partitioned by a partition plate omitted in the drawing into a supply air flow path 20 for flow from the outdoor air inlet port 4 to the supply air delivery port 17 and an exhaust air flow path 21 for flow from the exhaust air introduction port 18 to the exhaust air outlet port 7.

At both left and right side plates 22 and 23 of the body case 12, attachment holes 24 for the metal suspension fitting 11 and attachment holes 25 for the L-shaped metal fitting 9 are formed. That is, in the side plates 22 and 23 of the body case 12, the attachment holes 24 formed of screw holes into which fastening bolts for the metal suspension fitting 11 are screwed are formed in a position near the back plate 19. In the side plates 22 and 23 of the body case 12, the attachment hole 25s formed of screw holes into which fastening bolts for the L-shaped metal fitting 9 forming the coupling member are screwed are formed in a position near the front plate 16.

The heat exchange element 13 is arranged between the front plate 16 and the back plate 19 of the body case 12 to be parallel thereto with a predetermined interval in between them. When the outdoor air OA and the room air RA introduced into the body case 12 passes through the heat exchange element 13, total heat exchange is performed between the outdoor air OA and the room air RA at that time.

The supply air blower 14 is provided between the front plate 16 of the body case 12 and the heat exchange element 13. A discharge port of the supply air blower 14 is connected to the supply air delivery port 17 formed at the front plate 16 of the body case 12. By the supply air blower 14 being in an activated state, a flow of air from the outdoor air inlet port 4 toward the supply air delivery port 17 is generated in the supply air flow path 20 within the body case 12. Specifically, the outdoor air OA is drawn into the body case 12 from the outdoor air inlet port 4 in response to the suction force of the supply air blower 14. Accordingly, the outdoor air OA is supplied to the heat exchange element 13 for total heat exchange with the room air RA. Then, the outdoor air OA is supplied as the supply air SA into the humidification unit 3 from the supply air delivery port 17.

The exhaust air blower 15 is provided between the back plate 19 of the body case 12 and the heat exchange element 13. A discharge port of the exhaust air blower 15 is connected to the exhaust air outlet port 7 formed at the back plate 19 of the body case 12. When the exhaust air blower 15 is in an activated state, a flow of air from the exhaust air introduction port 18 toward the exhaust air outlet port 7 is generated in the exhaust air flow path 21 within the body case 12. Specifically, in response to the suction force of the exhaust air blower 15, the room air RA is taken into the humidification unit 3 from the room air inlet port 6 and taken into the body case 12 via the exhaust air introduction port 18. After the room air RA is supplied to the heat exchange element 13 for total heat exchange with the outdoor air OA, the room air RA is exhausted as the exhaust air EA outside the body case 12 from the exhaust air outlet port 7.

In Fig. 2, an electrical component box 26 housing an electrical component for the heat exchange unit 2 is attached to the side plate 22 located on the near side in the drawing of the body case 12. The supply air delivery port 17 of the body case 12 is provided with a guide 27 that guides the supply air SA discharged from an outlet port of the supply air blower 14 toward a humidification element 31 provided to the humidification unit 3.

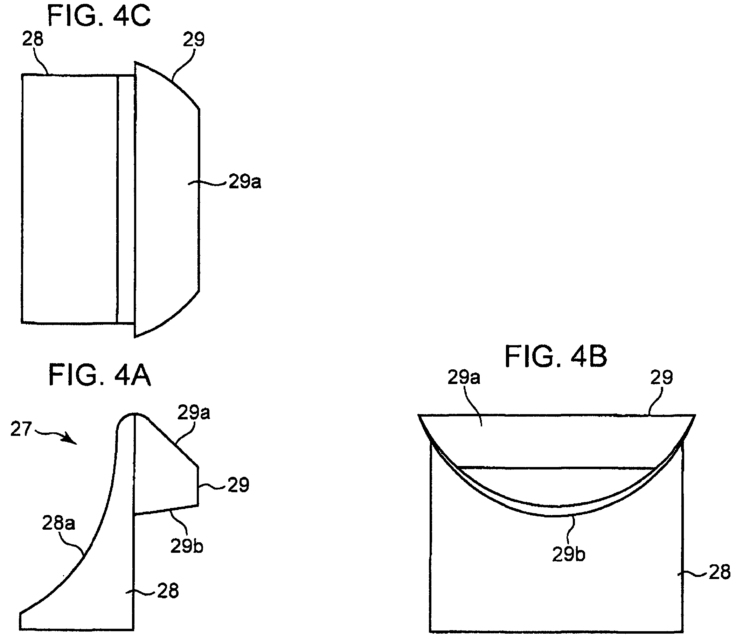

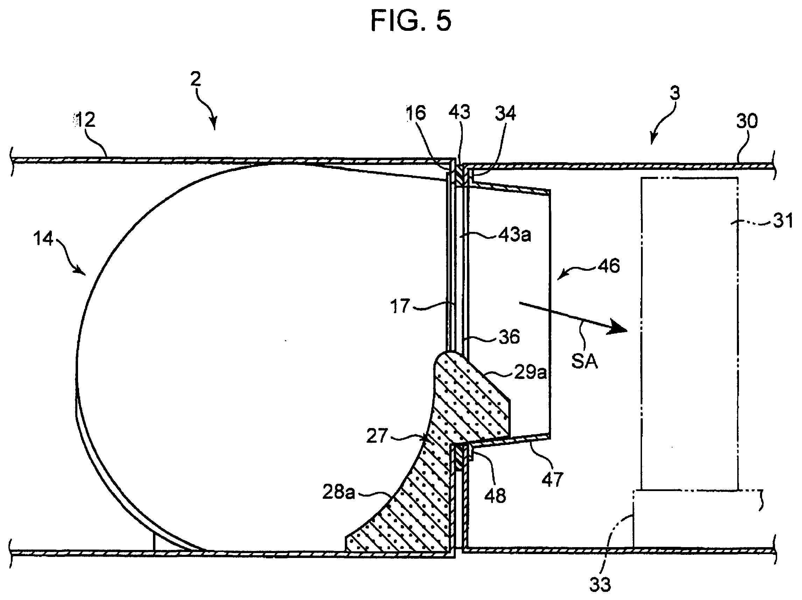

As shown in Figs. 4A to 4C and Fig. 5, the guide 27 includes a leg section 28 including an arc-shaped surface 28a along the lower surface of an outlet section of the supply air blower 14 and a guide section 29 protruded forward from an upper section of the front surface of the leg section 28. The guide 27 is formed of foamed polystyrene material or the like. The upper surface of the guide section 29 is formed as an inclined surface 29a sloped downward to the front, and the bottom surface of the guide section 29 is formed as an arc-shaped curved surface 29b.

The leg section 28 of the guide 27 is provided within the body case 12 and is attached to the front plate 16 in a state where the arc-shaped surface 28a is along the lower surface of the outlet section of the supply air blower 14. That is, in other words, the arc-shaped surface 28a forms a part of a casing of the supply air blower 14. The guide section 29 is attached to the front plate 16 in a state where the curved surface 29b is along the inner surface at a lower section of the supply air delivery port 17. A lower-side section of the supply air delivery port 17 is covered by the guide section 29 of the guide 27, and the guide section 29 is installed to the body case 12 in a state of being protruded outside the body case 12 and inserted into a supply air duct 46 described later. In this state, the bottom surface (curved surface 29b) of the guide section 29 is arranged along the inner surface of a duct body 47 described later of the supply air duct 46. Thus, the bottom surface (curved surface 29b) of the guide section 29 is in contact with the inner surface of the duct body 47. Accordingly, the supply air SA sent from the supply air blower 14 is guided to the humidification element 31 described later along the inclined surface 29a of the guide section 29.

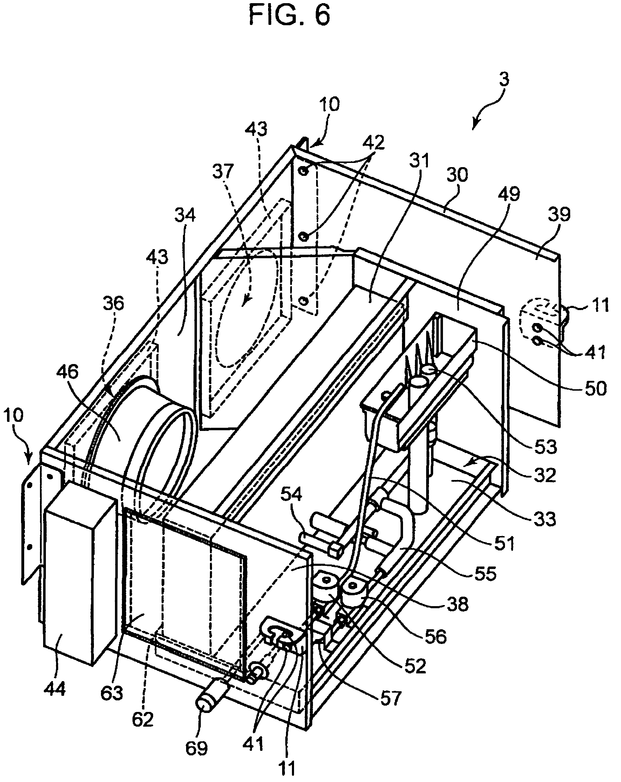

The humidification unit 3 has a function of humidifying the supply air SA sent from the supply air blower 14 and includes, as main components, a housing case 30 formed of a hollow box-shaped body having a cuboid shape, the humidification element 31 housed within the housing case 30, a plumbing component formed of a water supply and drainage mechanism 32 or the like that is provided on the downstream side in the supply air flow direction with respect to the humidification element 31 and performs water supply and drainage with respect to the humidification element 31, and a drain pan 33 provided below the humidification element 31 and the water supply and drainage mechanism 32, as shown in Fig. 2, Fig. 6, and the like.

At a front plate (wall surface on the far side from the heat exchange unit 2) 34 of the housing case 30, the supply air outlet port 5 and the room air inlet port 6 are formed. At a back plate (wall surface on the near side to the heat exchange unit 2) 35 of the housing case 30, a supply air introduction port 36 that introduces the supply air SA delivered from the supply air delivery port 17 of the heat exchange unit 2 and an exhaust air delivery port 37 that delivers the room air RA toward the exhaust air introduction port 18 of the heat exchange unit 2 are formed.

At both left and right side plates 38 and 39 of the housing case 30, attachment holes 41 for the metal suspension fitting 11 and attachment holes 42 for the L-shaped metal fitting 10 are each formed. That is, in the side plates 38 and 39 of the body case 30, the attachment holes 41 formed of screw holes into which fastening bolts for the metal suspension fitting 11 are screwed are formed in a position near the front plate 34. In the side plates 38 and 39 of the body case 30, the attachment holes 42 formed of screw holes into which fastening bolts for the L-shaped metal fitting 10 forming the coupling member are screwed are formed in a position near the back plate 35.

In Fig. 6, an electrical component box 44 housing an electrical component for the humidification unit 3 is installed at the side plate 38 located on the near side in the drawing of the housing case 30. Further, in Fig. 6, a sealing member 43 that seals a coupling section for the heat exchange unit 2 and the humidification unit 3 in an airtight manner to prevent leakage of air from the coupling section is fixed on the outer surface side (heat exchange unit 2 side) of the back plate 35. The sealing member 43 is provided to encompass a connecting section for the supply air delivery port 17 of the heat exchange unit 2 and the supply air introduction port 36 of the humidification unit 3. Another sealing member 43 is provided to encompass a connecting section for the exhaust air introduction port 18 of the heat exchange unit 2 and the exhaust air delivery port 37 of the humidification unit 3.

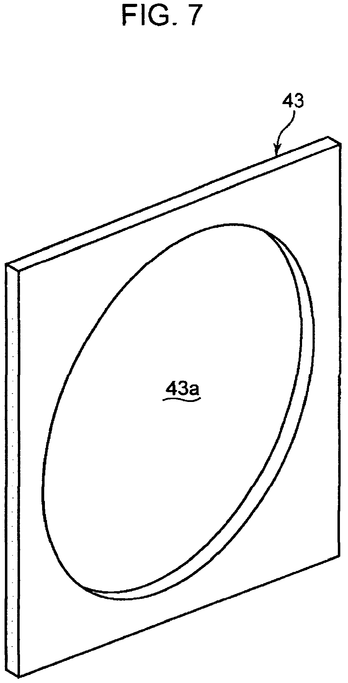

As shown in Fig. 7, the sealing member 43 is formed in a square plate shape having a predetermined thickness by a material having moderate elasticity and airtightness formed of polyethylene resin foam or the like. In a middle section of the sealing member 43, a circular vent hole 43a corresponding to the supply air introduction port 36 and the exhaust air delivery port 37 is formed. In a state where the vent hole 43a of the sealing member 43 and the supply air introduction port 36 and the exhaust air delivery port 37 of the housing case 30 are aligned, a pair of left and right sealing members 43 are attached to the back plate 35 of the housing case 30. In this state, the body case 12 of the heat exchange unit 2 and the housing case 30 of the humidification unit 3 are coupled to each other by the coupling member. The outer circumference of the connecting section for the supply air delivery port 17 and the supply air introduction port 36 of the humidification unit 3 is sealed with the sealing member 43. The outer circumference of the connecting section for the exhaust air introduction port 18 and the exhaust air delivery port 37 of the humidification unit 3 is also sealed with the sealing member 43. Accordingly, airtightness at the coupling section for the two cases 12 and 30 is ensured.

On the inner surface side of the back plate 35, the supply air duct 46 that regulates spreading of the supply air SA introduced via the supply air introduction port 36 is provided. That is, the supply air duct 46 is arranged within the humidification unit 3. As shown in Fig. 5, the supply air duct 46 includes the duct body 47 formed in a tapered cylindrical shape and a flange section 48 provided at a base section of the duct body 47. The flange section 48 is overlapped on the inner surface of the back plate 35 of the humidification unit 3 and screwed and fixed to the back plate 35. The supply air SA sent from the supply air blower 14 of the heat exchange unit 2 is regulated by the duct body 47 of the supply air duct 46 in the flowing direction and blown in a concentrated manner to the humidification element 31.

Within the housing case 30, a partition plate 49 is installed (see Fig. 6). The partition plate 49 partitions the internal space of the housing case 30 into a supply air flow space in which the supply air SA flows and an exhaust air flow space in which the room air RA flows. In the supply air flow space within the housing case 30, the humidification element 31 and the water supply and drainage mechanism 32 are arranged. The water supply and drainage mechanism 32 includes a water supply tank 50 that stores moisture supplied to the humidification element 31, a water supply pipe 51 that supplies tap water to the water supply tank 50, a water supply solenoid valve 52 provided to the water supply pipe 51, a level switch 53 provided to the water supply tank 50, an introduction pipe 54 that delivers tap water supplied into the water supply tank 50 to the humidification element 31, a drain pipe 55 that exhausts moisture within the humidification element 31 externally according to necessity, and a drain solenoid valve 56 and a float switch 57 which are provided to the drain pipe 55.

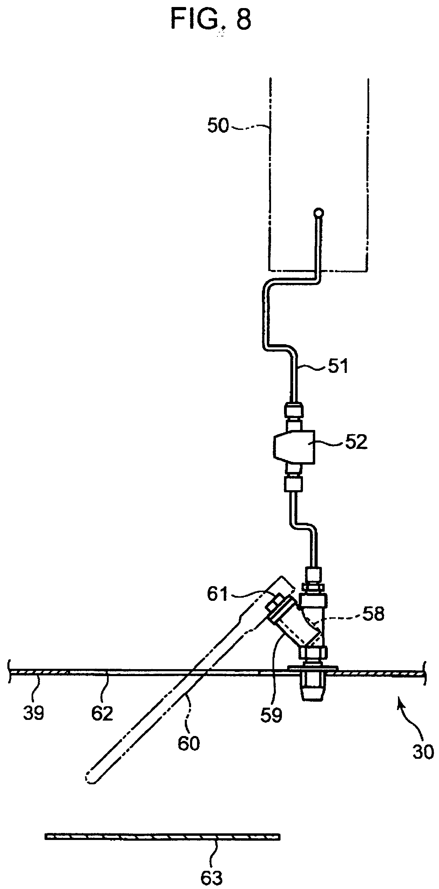

As shown in Fig. 8, the water supply pipe 51 is provided with a housing section 59 for a strainer 58 that filters impurities within supply water. The housing section 59 for the strainer 58 is protruded diagonally to the back side toward the humidification element 31 and the middle side of the housing case 30 from the water supply pipe 51 in planar view. At a tip section of the strainer housing section 59, a fixing bolt 61 rotated by a tool 60 such as a wrench is screwed.

At the side plate 39 of the housing case 30, an opening section 62 for maintenance having a size that allows the humidification element 31 to be taken out is formed. At the side plate 39, a cover 63 that covers the opening section 62 is screwed and fixed. In a state where the cover 63 is removed, a tip section of the tool 60 can be inserted into the housing case 30 from the opening section 62. By rotating the fixing bolt 61 to release the fixed state, the strainer 58 can be taken out from the housing section 59. That is, the fixing bolt 61 and the housing section 59 are arranged in a position such that the strainer 58 can be removed through the opening section 62 using the tool 60.

The e humidification element 31 is configured such that a water retention layer that stores moisture supplied from the water supply and drainage mechanism 32 is encapsulated in a bag body formed of a moisture permeable membrane. The humidification element 31 is provided between the front plate 34 and the back plate 35 of the housing case 30 and installed to be parallel thereto with a predetermined interval in between them. The supply air SA is humidified by moisture stored in the water retention layer of the humidification element 31.

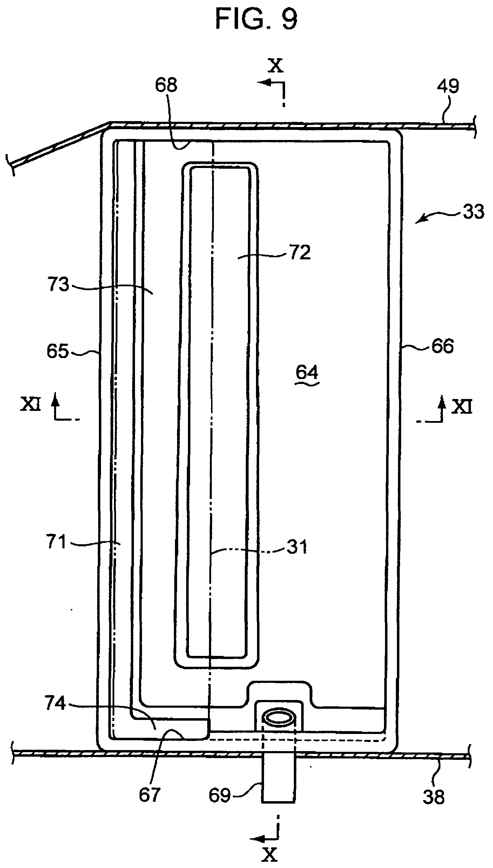

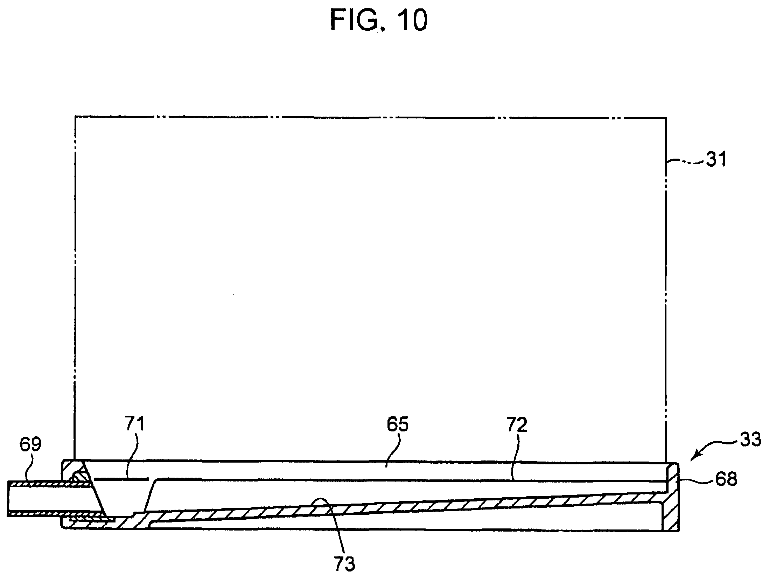

As shown in Fig. 9 and Fig. 10, the drain pan 33 is formed into a flat dish shape provided between the side plate 38 of the housing case 30 and the partition plate 49. The drain pan 33 includes a bottom wall 64 that covers the lower surface of an installing section for the humidification element 31 and the water supply and drainage mechanism 32, an upstream-side circumferential wall 65 located on the upstream side in the supply air flow direction within the housing case 30, a downstream-side circumferential wall 66 located on the downstream side in the supply air flow direction, and a pair of left and right side walls 67 and 68 installed to couple side end sections of the upstream-side circumferential wall 65 and side end sections of the downstream-side circumferential wall 66.

The upstream-side circumferential wall 65 of the drain pan 33 is arranged along the front surface of a lower section (lower section of the side surface) of the humidification element 31. That is, the upstream-side circumferential wall 65 is installed along the lower section of the side surface of the humidification element 31 on the upstream side in the supply air flow direction and the near side to the heat exchange unit 2. The upstream-side circumferential wall 65 is in contact with the lower section of the side surface of the humidification element 31. In other words, the drain pan 33 is provided in a range excluding a section on the upstream side in the supply air flow direction relative to the humidification element 31 (i.e., certain range including a section in which the humidification element 31 is installed and a portion on the downstream side thereof in the supply air flow direction). At a side wall 67 of the drain pan 33 located on the side plate 38 side of the housing case 30, a drain exhaust section 69 for externally exhausting drain water fallen into the drain pan 33 from the humidification element 31 is protruded.

The bottom wall 64 of the drain pan 33 is inclined such that the upper surface of a portion located on the side plate 38 side of the housing case 30 is located lower compared to a portion located on the partition plate 49 side (see Fig. 10). Accordingly, drain water fallen to the side plate 38 side within the drain pan 33 falls to the side plate 38 side and is exhausted externally from the drain exhaust section 69.

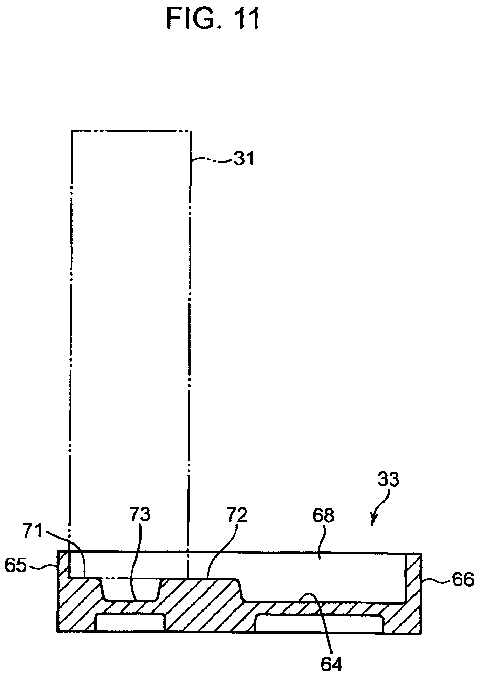

At the bottom wall 64 of the drain pan 33, as shown in Fig. 11, a first swollen section 71 in which a portion on the upstream side in the supply air flow direction and adjacent to the upstream-side circumferential wall 65 is swollen upward and a second swollen section 72 in which a portion located on the downstream side in the supply air flow direction at a predetermined distance from the first swollen section 71 is swollen upward, are each installed to extend in the width direction of the drain pan 33 (direction orthogonal to the flow direction of the supply air SA). At one end section in the width direction of the first swollen section 71, an end swollen section 74 (see Fig. 9) is connected to extend along the side wall 67. The first swollen section 71 is formed across the entire drain pan 33 in the width direction. The second swollen section 72 is formed with a margin at both end sections in the drain pan 33. Thus, the second swollen section 72 is formed with an interval from the side walls 67 and 68. On the first and second swollen sections 71 and 72 and on the end swollen section 74, a lower end section of the humidification element 31 is placed and supported.

Between the first swollen section 71 and the second swollen section 72 at the bottom wall 64 of the drain pan 33, a drain passage 73 that guides moisture fallen below the humidification element 31 toward the drain exhaust section 69 provided to the side wall 67 of the drain pan 33 is formed.

With the configuration, the water supply solenoid valve 52 is brought to an opened state and the drain solenoid valve 56 is brought to a closed state upon performing humidification by the humidification element 31. Accordingly, moisture supplied into the water supply tank 50 from the water supply pipe 51 is delivered to the humidification element 31 via the introduction pipe 54 to be stored within the humidification element 31.

When a sufficient amount of moisture is stored within the humidification element 31 and the water level within the water supply tank 50 rises to reach an upper limit height of the level switch 53, the water supply solenoid valve 52 is brought to a closed state to stop water supply. When the water level within the water supply tank 50 decreases and reaches a lower limit height of the level switch 53 due to the humidification function of the humidification element 31 being fulfilled, the water supply solenoid valve 52 is brought to an opened state to resume water supply.

Upon stopping humidification by the humidification element 31, the water supply solenoid valve 52 is brought to a closed state and the drain solenoid valve 56 is brought to an opened state. Accordingly, moisture stored within the humidification element 31 is drained into the drain pan 33 via the drain pipe 55, and drain water within the drain pan 33 is delivered outside the housing case 30 via the drain exhaust section 69. At a point when an exhaust time set to, for example, approximately 30 minutes has passed, the drain solenoid valve 56 is brought to a closed state to terminate drainage work.

The float switch 57 is configured to detect that an abnormal rise in water level within the drain pan 33 has been caused by occurrence of a failure such as an object being jammed in the drain exhaust section 69. When an abnormality is detected by the float switch 57, the water supply solenoid valve 52 and the drain solenoid valve 56 are brought to a closed state so as to stop water supply and drainage, respectively.

When the ventilation device 1 in which the heat exchange unit 2 and the humidification unit 3 are coupled to each other is attached to the ceiling section or the like and the ventilation device 1 is activated in this state, the outdoor air OA is suctioned into the heat exchange unit 2 from the outdoor air inlet port 4 in response to the suction force of the supply air blower 14. The outdoor air OA is supplied to the heat exchange element 13 for heat exchange, and then passed through the supply air duct 46 to be blown to the humidification element 31 within the humidification unit 3. The supply air SA humidified by the humidification element 31 is blown indoors from the supply air outlet port 5. The room air RA is suctioned into the heat exchange unit 2 from the humidification unit 3 in response to the suction force of the exhaust air blower 15 and exhausted outdoors as the exhaust air EA. In this manner, ventilation is performed.

In the ventilation device 1 that performs ventilation by supplying the outdoor air OA indoors as the supply air SA and exhausting the room air RA outdoors as the exhaust air EA, as described above, the heat exchange unit 2 provided with the heat exchange element 13 that performs heat exchange between the supply air SA and the exhaust air EA and the humidification unit 3 provided with the humidification element 31 that humidifies the supply air SA are provided. The heat exchange unit 2 is provided with the supply air blower 14 with which the outdoor air OA is suctioned and sent to the humidification unit 3 and the supply air delivery port 17 that delivers the supply air SA sent from the supply air blower 14 to the humidification unit 3. The humidification unit 3 is provided with the supply air introduction port 36 that introduces the supply air SA delivered from the heat exchange unit 2 and the supply air duct 46 that regulates spreading of the supply air SA introduced from the supply air introduction port 36. Thus, the productivity of the ventilation device 1 can be improved effectively while favorably maintaining the flow of the supply air SA and the flow of the exhaust air EA at the connecting section for the respective units 2 and 3.

That is, in the embodiment, the supply air blower 14 and the exhaust air blower 15 forming a main section of the ventilation device 1 and the heat exchange element 13 are provided to the heat exchange unit 2, while the humidification element 31 is provided within the humidification unit 3 formed separately from the heat exchange unit 2. Therefore, a significant change in the structure of the heat exchange unit 2 is not necessary for a type that requires a humidification function using the humidification element 31 and a type that does not require the humidification function. Thus, the specification of the heat exchange unit 2 can be made common to effectively improve the productivity of the ventilation device 1.

Moreover, whereas the flow of supply air and exhaust air within a heat exchange unit is significantly changed depending on the presence or absence of a humidification function in a conventional technique with a configuration in which a heat exchange element is provided to the heat exchange unit, the specification of the heat exchange unit 2 can be changed without a significant change in the flow of the supply air SA and the exhaust air EA within the heat exchange unit 2, in the case of a configuration in which the humidification element 31 is provided to the humidification unit 3 separate from the heat exchange unit 2 as in this embodiment. Therefore, the specification of the humidification unit 3 to be attached to a plurality of types of the heat exchange unit 2 can be made common. Accordingly, it is possible to effectively improve the productivity of the ventilation device 1.

Since the humidification unit 3 is provided with the supply air introduction port 36 that introduces the supply air SA delivered from the heat exchange unit 2 and the supply air duct 46 that regulates spreading of the supply air SA introduced from the supply air introduction port 36, the supply air SA sent from the supply air blower 14 of the heat exchange unit 2 can be concentrated efficiently with respect to the humidification element 31, regardless of the heat exchange unit 2 and the humidification unit 3 being formed separately. Thus, the humidification function of the humidification element 31 can be improved effectively, and airtightness at the coupling section for the heat exchange unit 2 and the humidification unit 3 can be ensured sufficiently without hindering the fluidity of the supply air SA.

That is, instead of the above menthoned configuration, a configuration can be such that a supply air duct for supplying the supply air SA sent from the supply air blower 14 of the heat exchange unit 2 with respect to the humidification element 31 in a concentrated manner is attached to the outer surface of the body case 12 (specifically, the front plate 16) of the heat exchange unit 2. However, in the case of such a configuration, work of inserting the supply air duct to a supply air introduction port formed in the humidification unit 3 to couple the two units 2 and 3 to each other, work of sealing the coupling section for the two units 2 and 3, and work of attaching the two units 2 and 3 to the ceiling section have to be performed simultaneously upon performing work of attaching and coupling the heat exchange unit 2 and the humidification unit 3 to the ceiling section. Thus, these works inevitably become extremely troublesome.

In contrast, in the case of the structure in which the supply air duct 46 is provided to the humidification unit 3 as in this embodiment, work of inserting the supply air duct 46 to the supply air introduction port 36 of the humidification unit 3 is unnecessary upon performing work of attaching and coupling the heat exchange unit 2 and the humidification unit 3 to the ceiling section. Therefore, work of attachment to the ceiling section and work of coupling the units 2 and 3 can be performed easily. Moreover, since the supply air duct 46 is not a hindrance upon performing work of sealing the coupling section for the two units 2 and 3, work of sealing the coupling section can be performed easily and appropriately.

In the embodiment, the configuration is such that the sealing member 43 that seals the coupling section for the heat exchange unit 2 and the humidification unit 3 is provided, and the outer circumference of the connecting section for the supply air delivery port 17 of the heat exchange unit 2 and the supply air introduction port 36 of the humidification unit 3 is encompassed by the sealing member 43. Thus, by attaching the sealing member 43 to the back plate 35 of the humidification unit 3 in advance, the coupling section can be sealed easily and appropriately with the sealing member 43 upon coupling the beat exchange unit 2 and the humidification unit 3 to each other.

In the case of the configuration in which the supply air duct is attached to the body case 12 of the heat exchange unit 2, it is necessary to form the vent hole 43a of a size corresponding to the supply air duct at the sealing member 43. However, in the case of the structure in which the supply air duct 46 is provided to the humidification unit 3 as in the embodiment, the size of the vent hole 43a can be set without being influenced by the supply air duct 46. Therefore, the thickness of the sealing member 43 at an outer circumference section of the vent hole 43a can be ensured sufficiently while reducing the vertical dimension of the respective units 2 and 3 forming the ventilation device 1. Thus, the coupling section for the heat exchange unit 2 and the humidification unit 3 can be sealed easily and effectively by the sealing member 43.

In the embodiment, the supply air delivery port 17 of the heat exchange unit 2 is provided with the guide 27 that guides the supply air SA sent from the supply air blower 14 toward the humidification element 31 of the humidification unit 3. Therefore, even in the case where the size and shape of a supply air flow section formed of the supply air introduction port 36 provided to the humidification unit 3 and the duct body 47 of the supply air duct 46 differ with respect to the size and shape of a supply air discharge port of the supply air blower 14, the sending direction of the supply air SA can be guided appropriately by the guide 27 such that the supply air SA sent from the supply air discharge port of the supply air blower 14 can be blown appropriately toward the humidification element 31. Thus, the efficiency of humidification of the supply air SA by the humidification element 31 can be improved effectively.

Further, in the embodiment, the humidification unit 3 is provided with the humidification element 31 that humidifies supply air, the water supply and drainage mechanism 32 that is provided on the downstream side of the humidification element 31 in the supply air flow direction and performs water supply and drainage with respect to the humidification element 31, and the drain pan 33 provided below the water supply and drainage mechanism 32 and the humidification element 31, and the upstream-side circumferential wall 65 located on the upstream side of the drain pan 33 in the supply air flow direction is installed along the front surface of the lower section of the humidification element 31. Therefore, the flow of the supply air SA blown to the humidification element 31 is controlled appropriately with a simple configuration, and the humidification capability of the humidification element 31 can be exhibited effectively.

That is, in the embodiment, the upstream-side circumferential wall 65 of the drain pan 33 is installed along the front surface of the lower section of the humidification element 31, and the drain pan 33 is provided in a range excluding a section on the upstream side in the supply air flow direction relative to the humidification element 31. Therefore, formation of a large gap between the lower end section of the humidification element 31 and the upstream-side circumferential wall 65 of the drain pan 33 can be prevented. Thus, the supply air SA blown into the humidification unit 3 from the supply air duct 46 can be prevented from entering into the drain pan 33 through a section below the humidification element 31, without providing a separate blocking member or the like, and occurrence of a situation where the deposition component generated within the drain pan 33 is blown upward and dispersed by the supply air SA can be prevented effectively with a simple configuration. Moreover, the supply air SA can be blown efficiently to the humidification element 31 to sufficiently exhibit the humidification capability.

Moreover, the plumbing component formed of the water supply and drainage mechanism 32 is provided on the downstream side of the humidification element 31 in the supply air flow direction, and the drain pan 33 is provided in a certain range including the installing section for the humidification element 31 and the section on the upstream side in the supply air flow direction (i.e., range corresponding to an installing section for the humidification element 31 and the water supply and drainage mechanism 32). Therefore, moisture fallen from the humidification element 31 and the water supply and drainage mechanism 32 and moisture carried to the downstream side in the flow direction by the supply air SA blown to the humidification element 31 can be received appropriately by the drain pan 33. Moreover, moisture carried by the supply air SA can be effectively prevented from being dispersed externally.

In the embodiment, the configuration is such that the bottom wall 64 of the drain pan 33 is provided with the first and second swollen sections 71 and 72 in which a portion on the upstream side in the supply air flow direction is swollen upward, and the lower end section of the humidification element 31 is placed on the first and second swollen sections 71 and 72. Therefore, the installed state of the humidification element 31 can be maintained stably, and entrance of the supply air SA into the drain pan 33 through the section below the humidification element 31 can be effectively prevented also by the first swollen section 72 and the like.

In the embodiment, the drain pan 33 is provided with the first swollen section 71 adjacent to the upstream-side circumferential wall 65 and the second swollen section 71 located on the downstream side in the supply air flow direction with a predetermined distance from the first swollen section 71, and the first and second swollen sections 71 and 72 are respectively installed to extend in the width direction of the drain pan 33. In the drain pan 33, the drain passage 73 with which moisture fallen below the humidification element 31 is guided toward the drain exhaust section 69 is formed between the first swollen section 71 and the second swollen section 72. Therefore, the lower end section of the humidification element 31 can be supported more stably by the first and second swollen sections 71 and 72, and moisture fallen below the humidification element 31 can be caused to flow smoothly to the side of an installing section for the drain exhaust section 69 along the drain passage 73 to thus be exhausted efficiently.

In the embodiment, the housing case 30 housing the humidification element 31 and the water supply and drainage mechanism 32 is formed with the opening section 62 for maintenance, and the water supply and drainage mechanism 32 is provided with the water supply pipe 51 extending on and in the width direction of the drain pan 30 and the housing section 59 for the strainer 58 that filters impurities within moisture supplied via the water supply pipe 51. The housing section 59 is provided to protrude toward the humidification element 31 from the water supply pipe 51. Therefore, upon cleaning the strainer 58 or the like, the fixing bolt 61 can be rotated with the tool 60 inserted into the housing case 30 from the opening section 62 to release the fixed state of the fixing bolt 61. Thus, work of attaching or detaching the strainer 58 with respect to the housing section 59 can be performed easily.

That is, in the embodiment, the housing section 59 for the strainer 58 is protruded diagonally to the back side toward the humidification element 31 and the middle side of the housing case 30 from the water supply pipe 51 in planar view. Therefore, it can be such that only the tip section of the tool 60 is inserted from the opening section 62 for maintenance provided for taking out the humidification element 31, and the fixing bolt 61 is rotated with the tool 60. Thus, work of attaching or detaching the strainer 58 can be performed extremely easily without the need for troublesome work of inserting the entire tool 60 into the housing case 30 to rotate the fixing bolt 61 in a state where the humidification element 31 is taken out from the housing case 30.

The embodiment will be summarized.
(1) The ventilation device of the embodiment performs ventilation by supplying outdoor air indoors as supply air and exhausting room air outdoors as exhaust air. The ventilation device includes the heat exchange unit provided with the heat exchange element that performs heat exchange between the supply air and the exhaust air and the humidification unit provided with the humidification element that humidifies the supply air. The heat exchange unit is provided with: the supply air blower with which the outdoor air is suctioned and sent to the humidification unit; and the supply air delivery port with which supply air sent from the supply air blower is delivered and guided to the humidification unit. The humidification unit is provided with; the supply air introduction port that introduces supply air delivered from the heat exchange unit; and the supply air duct that regulates spreading of supply air introduced from the supply air introduction port.
   In this configuration, the supply air blower and the heat exchange element forming the main section of the ventilation device are provided to the heat exchange unit, while the humidification element is provided within the humidification unit formed separately. Therefore, a significant change in the structure of the heat exchange unit is not necessary for a type that requires a humidification function using the humidification element and a type that does not require the humidification function. Therefore, the specification of the heat exchange unit can be made common to effectively improve the productivity of the ventilation device. The specification of the heat exchange unit can be changed without a significant change in the flow of supply air and exhaust air within the heat exchange unit. Therefore, the specification of the humidification unit to be attached to a plurality of types of the heat exchange unit can be made common. Accordingly, it is possible to further effectively improve the productivity of the ventilation device. Since the supply air introduction port that introduces supply air delivered from the heat exchange unit and the supply air duct that regulates spreading of supply air introduced from the supply air introduction port are provided to the humidification unit, supply air sent from the supply air blower of the heat exchange unit can be concentrated efficiently with respect to the humidification unit, regardless of the heat exchange unit and the humidification unit being formed separately as described above. Thus, the humidification function of the humidification element can be improved effectively, and airtightness at the coupling section for the heat exchange unit and the humidification unit can be ensured sufficiently without hindering the fluidity of supply air.
(2) In the ventilation device, a sealing member by which the section for connecting the supply air delivery port and the supply air introduction port is encompassed to implement sealing between the heat exchange unit and the humidification unit is preferably provided between the heat exchange unit and the humidification unit.
   In this configuration, the sealing member that seals the coupling section for the heat exchange unit and the humidification unit is provided. Therefore, by attaching the sealing member to the humidification unit in advance, sealing can be performed easily and appropriately with the sealing member between the two units upon coupling the heat exchange unit and the humidification unit to each other.
(3) In the ventilation device, the supply air delivery port of the heat exchange unit is preferably provided with the guide that guides supply air sent from the supply air blower toward the humidification element of the humidification unit.
   In this configuration, the sending direction of the supply air can be guided appropriately by the guide such that supply air sent from the supply air discharge port of the supply air blower can be blown appropriately toward the humidification element, even in the case where the supply air discharge port of the supply air blower and the supply air flow section of the supply air introduction port and the supply air duct provided to the humidification unit differ in size and shape. Thus, the efficiency of humidification of supply air by the humidification element can be improved effectively.
(4) In the ventilation device, the guide preferably includes a curved bottom surface arranged along an inner circumferential surface of the supply air delivery port and arranged along the inner surface at the supply air flow section of the supply air duct, and an inclined upper surface.

With this configuration, supply air sent from the supply air delivery port of the heat exchange unit can be caused to flow reliably along the inner surface at the supply air flow section of the supply air duct.

With this embodiment, as described above, the productivity of the ventilation device can be improved effectively while favorably maintaining the flow of supply air and the flow of exhaust air at the connecting section for the heat exchange unit and the humidification unit forming the ventilation device.

### Explanation of Reference Numerals

- 1: Ventilation device
- 2: Heat exchange unit
- 3: Humidification unit
- 13: Heat exchange element
- 14: Supply air blower
- 17: Supply air delivery port
- 27: Guide
- 36: Supply air introduction port
- 43: Sealing member
- 46: Supply air duct

## Claims

1. A ventilation device (1) that performs ventilation by supplying outdoor air indoors as supply air and exhausting room air outdoors as exhaust air, comprising:
a heat exchange unit (2) provided with a heat exchange element (13) that performs heat exchange between the supply air and the exhaust air; and
a humidification unit (3) formed separately from, but coupled to the heat exchange unit and provided with a humidification element (31) that humidifies the supply air, the heat exchange unit (2) being provided with: a supply air blower (14) with which the outdoor air is suctioned and sent to the humidification unit (3); and a supply air delivery port (17) with which supply air sent from the supply air blower (14) is delivered and guided to the humidification unit (3), and
the humidification unit (3) being provided with: a supply air introduction port (36) that introduces supply air delivered from the heat exchange unit (2); and a supply air duct (46) that regulates spreading of supply air introduced from the supply air introduction port (36), **characterized in that**
the supply air delivery port (17) of the heat exchange unit (2) is provided with a guide (27) that guides supply air sent from the supply air blower (14) toward the humidification element (31) of the humidification unit (3), and
the guide (27) includes a curved bottom surface (29b) arranged along an inner circumferential surface of the supply air delivery port (17) and arranged along an inner surface at a supply air flow section of the supply air duct (46), and an inclined upper surface (29a).

2. The ventilation device according to claim 1, wherein a sealing member (43) by which a section of connecting the supply air delivery port (17) and the supply air introduction port (36) is encompassed to implement sealing between the heat exchange unit (2) and the humidification unit (3) is provided between the heat exchange unit (2) and the humidification unit (3).

## Patentansprüche

1. Ventilationsvoruchtung (1), die eine Ventilation durch Zuführen von Außenluft nach innen als Zuluft und Abführen von Raumluft nach draußen als Abluft durchführt, umfassend:
eine Wärmetauschereinheit (2), die mit einem Wärmetauscherelement (13) versehen ist, das einen Wärmetausch zwischen der Zuluft und der Abluft durchführt; und
eine Befeuchtungseinheit (3), die separat von der Wärmetauschereinheit ausgebildet, aber damit gekoppelt und mit einem Befeuchtungselement (31) versehen ist, das die Zuluft befeuchtet, wobei die Wärmetauschereinheit (2) versehen ist mit: einem Zuluftgebläse (14), mit dem die Außenluft angesaugt und zur Befeuchtungseinheit (3) geschickt wird; und einer Zuluftauslassöffnung (17), mit der von dem Zuluftgebläse (14) geschickte Zuluft abgegeben und zur Befeuchtungseinheit (3) geführt wird, und
die Befeuchtungseinheit (3) versehen ist mit: einer Zulufteinführöffnung (36), die von der Wärmetauschereinheit (2) abgegebene Zuluft einführt; und einem Zuluftkanal (46), der die Verteilung von aus der Zulufteinführöffnung (36) eingeführter Zuluft reguliert, **dadurch gekennzeichnet, dass**
die Zuluftauslassöffnung (17) der Wärmetauschereinheit (2) mit einer Führung (27) versehen ist, die von dem Zuluftgebläse (14) geschickte Zuluft in Richtung zum Befeuchtungselement (31) der Befeuchtungseinheit (3) führt, und
die Führung (27) eine gekrümmte Unterseite (29b), die entlang einer inneren Umfangsfläche der Zuluftauslassöffnung (17) und entlang einer Innenfläche an einem Zuluftströmungsabschnitt des Zuluftkanals (46) angeordnet ist, und eine geneigte Oberseite (29a) enthält.

2. Ventilationsvorrichtung nach Anspruch 1, wobei ein Dichtungselement (43), durch das ein Abschnitt der Verbindung der Zuluftauslassöffnung (17) und der Zulufteinführöffnung (36) umgeben ist, um eine Dichtung zwischen der Wärmetauschereinheit (2) und der Befeuchtungseinheit (3) zu implementieren, zwischen der Wärmetauschereinheit (2) und der Befeuchtungseinheit (3) vorgesehen ist.

## Revendications

1. Dispositif de ventilation (1) qui effectue la ventilation grâce à la fourniture d'air extérieur vers un espace intérieur sous la forme d'air d'alimentation, et grâce à la décharge d'air ambiant vers un espace extérieur sous la forme d'air d'évacuation, comprenant :
une unité d'échange de chaleur (2) dotée d'un élément échangeur de chaleur (13) qui réalise l'échange de chaleur entre l'air d'alimentation et l'air d'évacuation ; et
une unité d'humidification (3) laquelle est formée séparément de l'unité d'échange de chaleur, mais couplée à cette dernière, et dotée d'un élément d'humidification (31) qui humidifie l'air d'alimentation, l'unité d'échange de chaleur (2) étant dotée des postes suivants : une soufflante d'air d'alimentation (14) à l'aide de laquelle l'air extérieur est aspiré et envoyé à l'unité d'humidification (3) ; et un port de délivrance d'air d'alimentation (17) grâce auquel l'air d'alimentation envoyé à partir de la soufflante d'air d'alimentation (14) est délivré et guidé vers l'unité d'humidification (3), et
l'unité d'humidification (3) est dotée des postes suivants : un port d'introduction d'air d'alimentation (36) qui introduit l'air d'alimentation délivré à partir de l'unité d'échange de chaleur (2) ; et une gaine d'air d'alimentation (46) qui régule la répartition de l'air d'alimentation introduit à partir du port d'introduction d'air d'alimentation (36), **caractérisé en ce que**
le port de délivrance d'air d'alimentation (17) de l'unité d'échange de chaleur (2) est doté d'un guide (27) qui guide l'air d'alimentation envoyé par la soufflante d'air d'alimentation (14) vers l'élément d'humidification (31) de l'unité d'humidification (3), et
le guide (27) inclut une surface inférieure incurvée (29b) agencée le long d'une surface circonférentielle interne du port de délivrance d'air d'alimentation (17) et agencée le long d'une surface interne au niveau d'une section à débit d'air d'alimentation de la gaine d'air d'alimentation (46), et une surface supérieure inclinée (29a).

2. Dispositif de ventilation selon la revendication 1, un élément d'étanchéisation (43) grâce auquel une section qui raccorde le port de délivrance d'air d'alimentation (17) et le port d'introduction d'air d'alimentation (36) est englobée pour assurer l'étanchéité entre l'unité d'échange de chaleur (2) et l'unité d'humidification (3), étant prévu entre l'unité d'échange de chaleur (2) et l'unité d'humidification (3).
